# EUROPÄISCHE PATENTANMELDUNG

(11) **EP 2 042 844 A2**
(43) Veröffentlichungstag der Anmeldung: **01.04.2009**
(21) Anmeldenummer: 08015369.5
(22) Anmeldetag: 30.08.2008
(51) Int. Cl.: G01J 3/02, G01J 3/18

(54) **Spektrometer mit Eintrittsspalt und die Herstellung des Eintrittsspaltes**

(30) Priorität: 25.09.2007 DE 102007045668
(71) Anmelder: Carl Zeiss MicroImaging GmbH, 07745 Jena (DE)
(72) Erfinder: Hofmann, Jens, 07743 Jena (DE); Correns, Nico, 94425 Weimar (DE); Freytag, Lutz, 07743 Jena (DE); Kerstan, Felix, 07747 Jena (DE); Jochmann, Doris, 07749 Jena (DE); Ziener, Carsten, 07747 Jena (DE); Förschler, Gerhard, 75175 Pforzheim (DE)
(74) Vertreter: Geyer, Fehners & Partner

(57) **Zusammenfassung**

Es ist ein Spektrometer mit Eintrittsspalt (4) und die Herstellung des Eintrittsspaltes (4) beschrieben, welches ein Gehäuse (1), einen Eintrittsspalt (4) zum Lichteinlass von Messlicht und ein im Innern des Gehäuses (1) angeordnetes, abbildendes Beugungsgitter (3) zur Aufspaltung und Abbildung des Messlichtes auf eine optoelektrische Detektoreinrichtung (7), welche im Innern des Gehäuses (1) angeordnet ist, wobei das Gehäuse (1) und die Grundplatte (2) durch gegenseitig zusammenwirkende Positionierungsmittel (5a; 5b; 5c; 5d) zur definierten, gegenseitigen Positionierung miteinander verbunden sind. Der Eintrittsspalt (4), die Positionierungsmittel (5a; 5b; 5c; 5d) der Grundplatte (2) sowie die Haltemittel (6a; 6b) für die Aufnahme und Befestigung der Detektoreinrichtung (7) sind feste Bestandteile der Grundplatte (2), welche durch Verfahren der Umformtechnik, des Laser- oder des Flüssigkeitsstrahlschneidens präzise und in geeigneter Form und in definierter, gegenseitiger Position aus der Grundplatte (2) herausgearbeitet sind. Die Positionierungsmittel (5a; 5b; 5c; 5d) der Grundplatte (2) und/oder die Haltemittel (6a; 6b) für die Detektoreinrichtung (7) sind als federnde Elemente ausgebildet.

## Beschreibung

### Gebiet der Erfindung

Die Erfindung betrifft ein Spektrometer mit Eintrittsspalt und die Herstellung des Eintrittsspaltes, und sie bezieht sich insbesondere auf ein Kompakt-Spektrometer, welches in miniaturisierter Form aufgebaut ist. Derartige Spektrometer werden für die unterschiedlichsten Messungen, wie z.B. in der Farbmesstechnik, Routineanalytik im Labor oder in der industriellen Prozessmesstechnik in großen Stückzahlen eingesetzt. Aus diesen Gründen ist es notwendig, Spektrometersysteme mit kompakten und kostengünstig herzustellenden Messköpfen mit schnellen Messzeiten und hoher spektraler Auflösung zur Verfügung zu stellen.

### Stand der Technik

In der DE 103 04 312 A1 ist ein Kompakt-Spektrometer beschrieben, welches aus einem Eintrittsspalt, einem abbildenden Gitter, Detektorelementen in zeilen- oder matrixform und Elementen einer Steuer- und Auswerteelektronik besteht. Dabei befinden sich der Eintrittsspalt und die Detektorelemente auf einem gemeinsamen Träger, auf dessen freien Flächen die Ansteuer- und Auswerteelektronik angeordnet ist. Das abbildende Gitter ist im Spektrometergehäuse angeordnet, welches mit dem Träger zum passgenauen und sicheren Zusammenfügen durch Hilfsmittel in Form eines Fest- und eines Loslagers verbunden ist.

In der EP 1 041 372 A1 ist ein Spektrometer mit einem an einem Tragkörper, in Form eines Gehäuses, angeordneten Eintrittsspalt für den Messlichteinlass beschrieben. Am Tragkörper sind ferner ein Reflexionsbeugungsgitter und eine optoelektrische Detektoreinrichtung angeordnet, welche auf einer Grundplatte fest vorpositioniert ist. Der Tragkörper und die Grundplatte weisen gegenseitig zusammenwirkende mechanische Positionierungsmittel zur definierten Positionierung dieser Bauteile.

Folgende wesentliche Nachteile dieser Einrichtungen des Standes der Technik ergeben sich insbesondere für die Serienproduktion in großen Stückzahlen:
Der Eintrittsspalt ist ein teueres Einzelteil. Der Justageaufwand zur präzisen gegenseitige Positionierung der einzelnen Bauteile ist hoch. Einer Verkleinerung des Abstandes von Eintrittsspalt und Detektoreinrichtung im Sinne einer Miniaturisierung des Spektrometers sind enge Grenzen gesetzt.

### Beschreibung der Erfindung

So liegt der Erfindung die Aufgabe zu Grunde, ein Spektrometer mit Eintrittsspalt zu schaffen, welches durch eine besonders vorteilhafte Ausgestaltung und Fertigung der Grundplatte sowie des Eintrittsspaltes montage- und kostengünstig auch in großen Stückzahlen ohne viel Justageaufwand in kleinen räumlichen Abmessungen herstellbar ist.

Erfindungsgemäß wird diese Aufgabe bei einem nach dem Oberbegriff des Hauptanspruches aufgebauten Spektrometer mit den im kennzeichnenden Teil offenbarten Mitteln gelöst. In den Unteransprüchen sind Einzelheiten des Spektrometers und zur Herstellung des Eintrittsspaltes, und weitere Ausgestaltungen insbesondere des Eintrittsspaltes des Spektrometers, dargelegt.

Dabei ist es im Bezug auf die Ausgestaltung und im Sinne einer wirtschaftlichen und präzisen Herstellung des Eintrittsspaltes vorteilhaft, wenn der Eintrittsspalt durch die aufeinander folgenden Fertigungsschritte in der Grundplatte hergestellt ist:
- Ausstanzen oder Ausschneiden eines Lappens aus der Grundplatte und Herausbiegen des Lappens aus der Ebene der Grundplatte,
- Stauchen des Lappens um einen von der Breite des zu erzeugenden Eintrittsspaltes abhängenden Betrag und
- Zurückpressen des Lappens in die Ebene der Grundplatte und damit die
- Fertigstellung des Spaltes oder der Öffnung des Eintrittsspaltes.

Ferner kann es von Vorteil sein, wenn der Eintrittsspalt durch Ausschneiden eines Lappens aus der Grundplatte durch Laser- oder Flüssigkeitsstrahlschneiden hergestellt ist.

Im Sinne einer wirtschaftlichen Fertigung, insbesondere für große Stückzahlen, kann es vorteilhaft sein, wenn der Eintrittsspalt, die Positionierungsmittel der Grundplatte und die Haltemittel für die Detektoreinrichtung in einer genau definierten, gegenseitigen Position durch umformtechnische Fertigungsverfahren aus der Grundplatte in wenig Arbeitsgängen herausgearbeitet sind.

Vorteilhafte Ausgestaltungen ergeben sich, wenn der den Eintrittsspalt begrenzende, aus der Grundplatte herausgearbeitete Lappen eine trapezförmige, quadratische, rechteckige oder eine aus Bögen und Geraden zusammengesetzte Form besitzt.

Vorteilhaft ist es ferner, dass die Grundplatte aus Metall oder einem geeigneten Kunststoff besteht. Auch die Verwendung einer aus einem keramischen Werkstoff bestehenden Grundplatte ist denkbar.

### Kurze Beschreibung der Zeichnungen

Die Erfindung soll nachstehend an einem Ausführungsbeispiel näher erläutert werden. In der Zeichnung zeigen
- Fig.1: einen Schnitt durch ein Spektrometer,
- Fig.2: eine Draufsicht auf die Grundplatte,
- Fig.3: Einzelheit A in Vergrößerung,
- Fig.4: Einzelheit B in Vergrößerung,
- Fig.5a bis c: Veranschaulichung von Verfahrensschritten zur Herstellung des Eintrittsspaltes,
- Fig.6: eine Draufsicht auf die Grundplatte mit Eintrittsspalt mit trapezförmiger Zunge,
- Fig.7: eine Draufsicht auf die Grundplatte mit Eintrittsspalt mit einer Zunge aus Geraden und Bögen und
- Fig.8: eine Draufsicht auf die Grundplatte mit Eintrittsspalt mit rechteckiger Zunge.

### Ausführliche Beschreibung der Zeichnungen

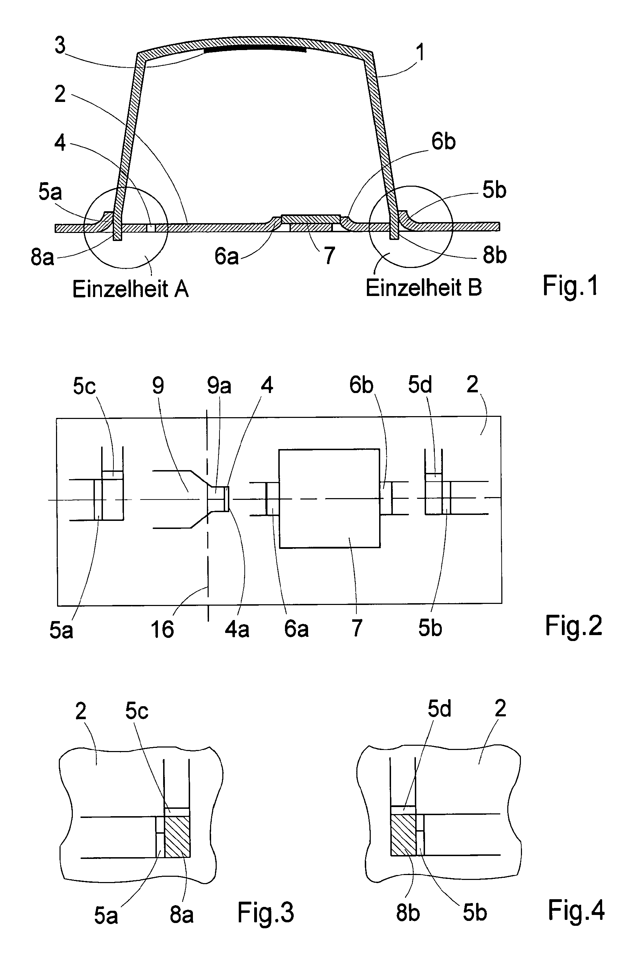

In Fig.1 ist ein kompakt aufgebautes Spektrometer im Querschnitt dargestellt. Das Spektrometer besteht unter anderem aus einem Gehäuse 1, welches durch eine Grundplatte 2 abgeschlossen ist. Im Inneren des Gehäuses 1, der Grundplatte 2 gegenüberliegend, ist an der Innenwand des Gehäuses 1 ein abbildendes Beugungsgitter 3 angeordnet. In der Grundplatte 2 sind ein Eintrittsspalt 4, Positionierungsmittel 5a; 5c und 5b; 5d sowie Befestigungs- oder Haltemittel 6a und 6b vorgesehen (Fig.2), mit denen eine präzise Positionierung des das Beugungsgitter 3 tragenden Gehäuses 1 bezüglich der Grundplatte 2 und eine sichere und präzise Aufnahme und Befestigung einer auf der Grundplatte 2 angeordneten optoelektrischen Detektoreinrichtung 7 realisierbar ist. Am Gehäuse 1 sind vorteilhaft Zapfen 8a; 8b angeordnet, welche in die als Öffnungen oder Bohrungen ausgebildeten Positionierungsmittel 5a; 5b unter Spannung eingreifen und so das Gehäuse 1 und die Grundplatte 2 präzise und sicher miteinander verbinden.

Die Haltemittel 6a; 6b für die Befestigung der Detektoreinrichtung 7 auf der Grundplatte 2 sind ebenfalls vorteilhaft als federnde, aus der Ebene der Grundplatte 2 herausgebogene Zapfen ausgebildet. Durch die federnden Eigenschaften der Zapfen 8a; 8b und der Haltemittel 6a; 6b wird eine weitestgehend spannungsfreie Befestigung der betreffenden Bauteile gewährleistet.

Bei der in Fig.2 dargestellten Draufsicht auf die Grundplatte 2 (das Gehäuse 1 ist in dieser Figur nicht dargestellt) wird der Eintrittsspalt 4 durch eine Kante 4a der Grundplatte 2 und durch eine Kante 9a eines aus der Grundplatte 2 mit einer trapezförmigen Schnittkante ausgeschnittenen Lappens 9 gebildet.

Fig.3 zeigt vergrößert dargestellt die Positioniermittel 5a und 5c die durch Umformung aus dem Material der Grundplatte 2 herausgearbeitet sind und welche federnd an dem Zapfen 8a des Gehäuses 1 anliegen, der in einer Ausnehmung der Grundplatte 2 eingeführt ist.

Fig.4 zeigt vergrößert dargestellt die Positioniermittel 5b und 5d die durch Umformung aus dem Material der Grundplatte 2 herausgearbeitet sind und welche federnd an dem Zapfen 8b des Gehäuses 1 anliegen, der in einer Ausnehmung der Grundplatte 2 eingeführt ist.

Die federnd ausgeführten Positionierungsmittel 5a und 5b sind gleichartig aufgebaut. Sie besitzen jedoch vorteilhaft eine voneinander abweichende Federkonstante, damit auch bei Temperaturänderungen eine definierte gegenseitige Position von Gehäuse 1 und Grundplatte 2 und somit auch der optisch wirksamen Elemente des Spektrometers aufrechterhalten bleibt. Die Lage einer durch die Berechnung der optischen Elemente definierten neutralen Linie 16 (Fig. 2) bleibt dadurch auch bei Temperaturänderungen weitestgehend erhalten.

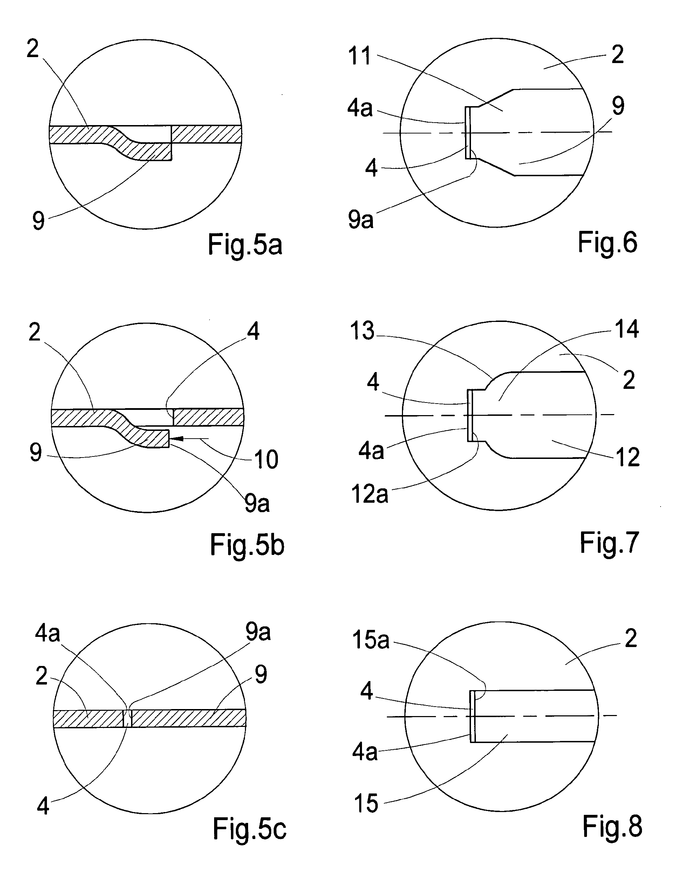

In den Figuren 5a bis 5c sind anhand von Schnitten durch den, den Eintrittsspalt 4 umfassenden Bereich der Grundplatte 2 zur Veranschaulichung die einzelnen Verfahrensschritte zur umformenden Herstellung der Eintrittsspalt 4 dargestellt.

So zeigt Fig.5a den ersten Verfahrensschritt, bei welchem aus der Grundplatte 2 ein Lappen 9 ausgestanzt oder ausgeschnitten und aus der Ebene der Grundplatte 2 (in der Fig.5a nach unten) herausgebogen ist.

In einem zweiten Umformschritt, welcher in Fig.5b veranschaulicht ist, wird der aus der Grundplatte 2 herausgebogene Lappen 9 mit Hilfe eines nicht dargestellten Werkzeugs in Richtung des Pfeils 10 gestaucht, so dass die durch das Ausstanzen oder Ausschneiden in der Grundplatte 2 gebildete Kante 4a und die Kante 9a des Lappens 9 seitlich zueinander um einen gewünschten, von der Breite des zu erzeugenden Eintrittsspaltes 4 abhängenden Betrag verschoben sind.

Die endgültige Fertigstellung des Eintrittsspaltes 4 erfolgt in dem in Fig.5c veranschaulichten Umformschritt, in welchem der aus der Grundplatte 2 herausgebogene Lappen 9 durch ein geeignetes Umformwerkzeug wieder in die Ebene der Grundplatte 4 zurückgebogen wird, wodurch die Öffnung des Eintrittsspaltes 4 fertiggestellt wird.

In den Fig.6 bis 8 sind unterschiedliche Schnittformen der aus der Grundplatte 2 geschnittenen Lappen dargestellt. So zeigt Fig.6 einen Lappen 9 mit einem trapezförmigen Mittelstück 11.

Der in Fig.7 dargestellte Lappen 12 ist durch Bögen 13 und Geraden begrenzt, dessen Mittelstück 14 durch die Bögen 13 begrenzt ist. Die Öffnung des Eintrittsspaltes 4 wird durch die Kante 4a der Grundplatte 2 und eine Kante 12a eines Lappens 12 gebildet.

In Fig.8 ist ein Lappen 15 mit einem rechteckigen Profil dargestellt. Die Öffnung des Eintrittsspaltes 4 wird auch hier durch die Kante 4a der Grundplatte 2 und eine Kante 15a eines Lappens 15 gebildet.

Denkbar sind durchaus auch andere geeignete Profile für die Lappen der Grundplatte 4, wie z.B. quadratische Profile.

### Bezugszeichenliste

- 1: Gehäuse
- 2: Grundplatte
- 3: Beugungsgitter
- 4: Eintrittsspalt
- 4a: Kante
- 5a; 5b: Positioniermittel
- 6a; 6b: Haltemittel
- 7: Detektoreinrichtung
- 8a; 8b: Zapfen
- 9: Lappen
- 9a: Kante
- 10: Pfeil
- 11: Mittelstück
- 12: Lappen
- 12a: Kante
- 13: Bogen
- 14: Mittelstück
- 15: Lappen
- 15a: Kante
- 16: Neutrale Linie

## Patentansprüche

1. Spektrometer mit Eintrittsspalt und Herstellung des Eintrittsspaltes, welches ein Gehäuse, einen Eintrittsspalt zum Lichteinlass von Messlicht und ein im Innern des Gehäuses angeordnetes abbildendes Beugungsgitter zur Aufspaltung und Abbildung des Messlichtes auf eine optoelektrische Detektoreinrichtung umfasst, welche im Innern des Gehäuses angeordnet ist, wobei das Gehäuse und die Grundplatte durch gegenseitig zusammenwirkende Positionierungsmittel zur definierten, gegenseitigen Positionierung miteinander verbunden sind,
**dadurch gekennzeichnet,**
- **dass** der Eintrittsspalt (4), die Positionierungsmittel (5a; 5b; 5c; 5d) der Grundplatte (2) sowie Haltemittel (6a; 6b) für die Aufnahme und Befestigung der Detektoreinrichtung (7) feste (integrierte) Bestandteile der Grundplatte (2) sind, welche durch Verfahren der Umformtechnik, des Laser- oder des Flüssigkeitsstrahlschneidens in präziser und geeigneter Form und in definierter, gegenseitiger Position aus der Grundplatte (2) herausgearbeitet sind
- und **dass** die Positionierungsmittel (5a; 5b; 5c; 5d) der Grundplatte (2) und/oder die Haltemittel (6a; 6b) für die Detektoreinrichtung (7) als federnde Elemente ausgebildet sind.

2. Spektrometer mit Eintrittsspalt nach Anspruch 1, **dadurch gekennzeichnet, dass** der Eintrittsspalt (4) durch die aufeinander folgenden Verfahrensschritte in der Grundplatte (2) hergestellt ist:
- Ausstanzen oder Ausschneiden eines Lappens (9; 12; 15) aus der Grundplatte (2) und Herausbiegen des Lappens (9; 12; 15) aus der Ebene der Grundplatte (2),
- Stauchen der Lappens (9; 12; 15) um einen von der Breite des zu erzeugenden Spaltes (4) abhängenden Betrag und
- Zurückpressen des Lappens (9; 12; 15) in die Ebene der Grundplatte (2) und damit Fertigstellung der Öffnung des Eintrittsspaltes (4).

3. Spektrometer mit Eintrittsspalt nach Anspruch 1, **dadurch gekennzeichnet, dass** der Eintrittsspalt (4) in der Grundplatte (2) durch Laser- oder Flüssigkeitsstrahlschneiden hergestellt ist.

4. Spektrometer mit Eintrittsspalt nach mindestens einem der vorgehenden Ansprüche, **dadurch gekennzeichnet, dass** der Eintrittsspalt (4), die Positionierungsmittel (5a; 5b; 5c; 5d) der Grundplatte (2) und die Haltemittel (6a; 6b) für die Detektoreinrichtung (7) in einer genau definierten, gegenseitigen Position durch umformtechnische Fertigungsverfahren aus der Grundplatte (2) hergestellt sind.

5. Spektrometer mit Eintrittsspalt nach mindestens einem der vorgehenden Ansprüche, **dadurch gekennzeichnet, dass** der die Eintrittsspalt (4) begrenzende Lappen (9; 12; 15) eine trapezförmige, quadratische, rechteckige oder eine aus Bögen und Geraden zusammengesetzte Form besitzt.

6. Spektrometer mit Eintrittsspalt nach mindestens einem der vorgehenden Ansprüche, **dadurch gekennzeichnet, dass** die Grundplatte (2) aus Metall, aus einem geeigneten Kunststoff oder aus einem keramischen Werkstoff besteht.
